# EUROPEAN PATENT SPECIFICATION

(11) **EP 2 275 302 B1**
(45) Date of publication and mention of the grant of the patent: **19.12.2012**
(21) Application number: 09251824.0
(22) Date of filing: 17.07.2009
(51) Int. Cl.: H02P 25/02, H02P 25/10, H02P 29/00, B60L 15/20

(54) **Bidirectional, variable speed electric motor drive system**
Bidirektionales elektrisches Motorantriebssystem mit variabler Geschwindigkeit
Système de commande de moteur électrique bidirectionnel et à vitesse variable

(43) Date of publication of application: 19.01.2011
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Wright, Howard Hugh Burnby

(56) References cited:
- CN-A- 101 188 371
- US-A- 5 376 869
- US-A1- 2007 113 703

## Description

### BACKGROUND OF THE INVENTION

### (a) Field of the invention

The present invention is through the power of the power source to drive the bidirectional unequal speed electric motor for bidirectional positive or reverse rotation via bidirectional unequal speed electric motor operative control device to further drive the input end of bidirectional same or different speed change ratio output transmission device, and it is further through the output end of the bidirectional same or different speed change ratio output transmission device to operate different speed change ratio bidirectional rotating output while in different driving input direction to drive the rotating load, wherein the present invention can be applied in the bidirectional unequal speed electric motor driven carriers such as electric bicycles, electric motorcycles, or electric vehicles, or electric industrial machineries, tool machineries, or various electric tools or other electric motor driven loads.

### (b) Description of the Prior Art

Beside of operatively controlling the bidirectional unequal speed electric motor for speed change, the bidirectional variable speed driving output of conventional bidirectional unequal speed electric motor driving system is usually required to be accomplished by a CVT or shift-change methods, therefore the structure is complicated with high cost but poor transmission efficiency.

US 5 376 869 discloses an electric vehicle drive train which has a controller for detecting and compensating for vehicle rollback. The vehicle includes an electric motor which is rotatable in opposite directions corresponding to the opposite directions of vehicle movement. The direction of movement can be selected by the driver.

US 2007-0113703 discloses a bi-directional two mode input, uni-directional single mode output drive train. A gear and clutch cluster receives rotational input from a bi-directional input gear, and produces rotational output to a drive shaft of a drive train in a single direction for both rotational directions of the bi-rotational input.

### SUMMARY OF THE INVENTION

The present invention discloses that the output end of the bidirectional unequal speed electric motor being particularly used to provide bidirectional rotating input is transmitted to the input end of the bidirectional same or different speed change ratio output transmission device, and is through the output end of the bidirectional same or different speed change ratio output transmission device to further provide bidirectional rotating output for driving the rotating load, wherein the user is through operatively controlling the rotating speed and operating direction of the bidirectional unequal speed electric motor to change the driving input direction thereby allowing the bidirectional same or different speed change ratio output transmission device having different speed change ratio to provide same or different speed change ratio bidirectional rotating output while in different driving input direction and different rotating speed.

According to the present invention as set forth in claim 1, a bidirectional, electric motor drive system with a bidirectional input and a same or different directional output comprises: an electric motor, capable of bi-directional, variable-speed rotation, in a forwards direction or in a reverse direction; a control device for controlling the rotational direction and the rotational speed of the electric motor; a variable-speed and variable-directional output transmission device in drivable engagement with the output of the electric motor; a load in drivable engagement with the output end of the variable-speed and variable-directional output transmission device; and a transmission device disposed between the variable-speed and variable-directional output transmission device and the load, or between the electric motor and the variable-speed and variable-directional output transmission device, or between the electric motor and the variable-speed and variable-directional output transmission device as well as between the variable-speed and variable-directional output transmission device and the load. wherein the variable-speed and variable-directional output transmission device is such as to accept the variable rotational speed and different rotational direction output from the electric motor and provide a variable-directional rotational output at a variable or constant speed ratio; and wherein the rotational direction and rotational speed of the output from the variable-speed and variable-directional output transmission device is capable of being same or different to the rotational direction of the input from the electric motor.

### BRIEF DESCRIPTION OF THE DRAWINGS

Fig. 1 is a block schematic view of basic structure of a bidirectional unequal speed electric motor driven bidirectional output system.
Fig. 2 is a block schematic view showing the driving system application example of Fig 1, wherein a transmission device(104) is additionally installed between the bidirectional unequal speed electric motor(101) and the bidirectional same or different speed change ratio output transmission device(102).
Fig. 3 is a block schematic view showing the driving system application example of Fig 1, wherein a transmission device(104) is additionally installed between the bidirectional same or different speed change ratio output transmission device(102) and the driven rotating load(103).
Fig. 4 is a block schematic view showing the driving system application example of Fig 1, wherein a transmission device(104) is respectively additionally installed between the bidirectional unequal speed electric motor(101) and the bidirectional same or different speed change ratio output transmission device(102) as well as between bidirectional same or different speed change ratio output transmission device(102) and the driven rotating load(103).
Fig. 5 is a block schematic view showing a bidirectional unequal speed electric motor driven bidirectional output system installed with the bidirectional unequal speed electric motor loading current detecting device.
Fig. 6 is a block schematic view showing the driving system application example of Fig 5, wherein a transmission device(104) is additionally installed between the bidirectional unequal speed electric motor(101) and the bidirectional same or different speed change ratio output transmission device(102).
Fig. 7 is a block schematic view showing the driving system application example of Fig 5, wherein a transmission device(104) is additionally installed between the bidirectional same or different speed change ratio output transmission device(102) and the driven rotating load(103).
Fig. 8 is a block schematic view showing the driving system application example of Fig 5, wherein a transmission device(104) is respectively additionally installed between the bidirectional unequal speed electric motor(101) and the bidirectional same or different speed change ratio output transmission device(102) as well as between bidirectional same or different speed change ratio output transmission device(102) and the driven rotating load(103).
Fig. 9 is a block schematic view of a basic structure of a bidirectional different speed ratio electric motor driving device with bidirectional input.
Fig. 10 is a block schematic view showing the driving system application example of Fig 9, wherein a transmission device(104) is additionally installed between the electric motor(101) and the different rotating speed ratio and direction output transmission device(102).
Fig. 11 is a block schematic view showing the driving system application example of Fig 9, wherein a transmission device(104) is additionally installed between the different rotating speed ratio and direction output transmission device(102) and the driven rotating load(103).
Fig. 12 is a block schematic view showing the driving system application example of Fig 9, wherein a transmission device(104) is respectively additionally installed between the electric motor(101) and the different rotating speed ratio and direction output transmission device(102) as well as between the different rotating speed ratio and direction output transmission device(102) and the rotating load(103).
Fig. 13 is a block schematic view of a basic structure of a bidirectional different speed ratio electric motor driving device with bidirectional input installed with the electric motor(101) loading current detecting device.
Fig. 14 is a block schematic view showing the driving system application example of Fig 13, wherein a transmission device(104) is additionally installed between the electric motor(101) and the different rotating speed ratio and direction output transmission device(102).
Fig. 15 is a block schematic view showing the driving system application example of Fig 13, wherein a transmission device(104) is additionally installed between the different rotating speed ratio and direction output transmission device(102) and the driven rotating load(103).
Fig. 16 is a block schematic view showing the driving system application example of Fig 13, wherein a transmission device(104) is respectively additionally installed between the electric motor(101) and the different rotating speed ratio and direction output transmission device(102) as well as between the different rotating speed ratio and direction output transmission device(102) and the driven rotating load(103).

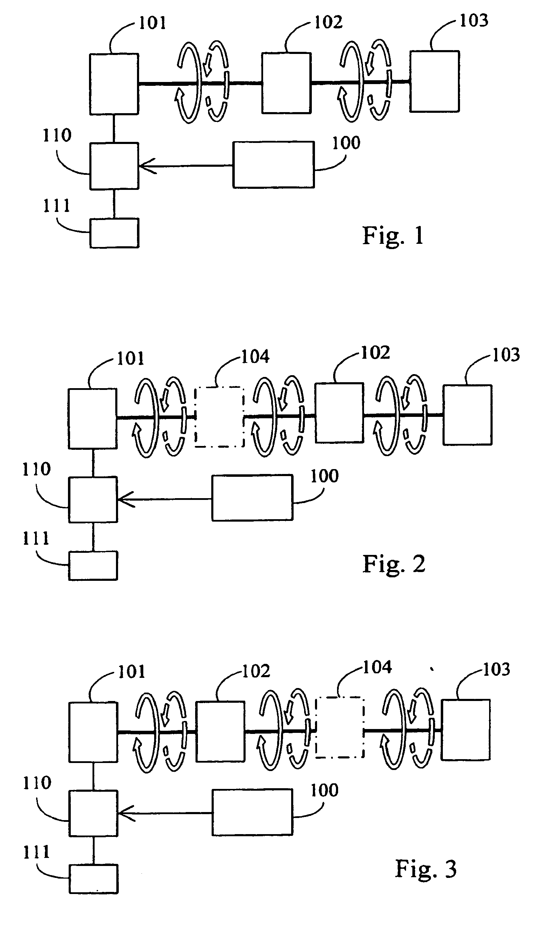

### DETAILED DESCRIPTION OF EMBODIMENTS OF FIGURES 1 TO 8: DESCRIPTION OF MAIN COMPONENT SYMBOLS

100: Power supply device
101: Bidirectional unequal speed electric motor
102: Bidirectional same or different speed change ratio output transmission device
103: Rotating load
104: Transmission device
109: Bidirectional unequal speed electric motor load current detecting device
110: Bidirectional unequal speed electric motor operative control device
111: Input device

The present invention is through the driving bidirectional positive or reverse rotation of the bidirectional unequal speed electric motor to drive the input end of bidirectional same or different speed change ratio output transmission device and it is further through the output end of the bidirectional same or different speed change ratio output transmission device to further operate different speed change ratio bidirectional rotating output for driving the rotating load while accepting different driving input direction and different rotating speed input from the bidirectional unequal speed electric motor, wherein the present invention can be applied in the bidirectional unequal speed electric motor driven carriers such as electric bicycles, electric motorcycles, or electric vehicles, or electric industrial machineries, tool machineries, or various electric tools or other electric motor driven loads.

Fig. 1 is a block schematic view of a basic structure of the bidirectional unequal speed electric motor driven bidirectional output system. Figure 1 does not fall within the scope of the claimed invention, but since the embodiments of Figures 2 to 4 do fall within the scope of the invention, and are based on the system of Figure 1, it is described in detail below.

Fig. 2 is a block schematic view showing the driving system application example of Fig 1, wherein a transmission device(104) is additionally installed between the bidirectional unequal speed electric motor(101) and the bidirectional same or different speed change ratio output transmission device(102).

Fig. 3 is a block schematic view showing the driving system application example of Fig 1, wherein a transmission device(104) is additionally installed between the bidirectional same or different speed change ratio output transmission device(102) and the driven rotating load(103).

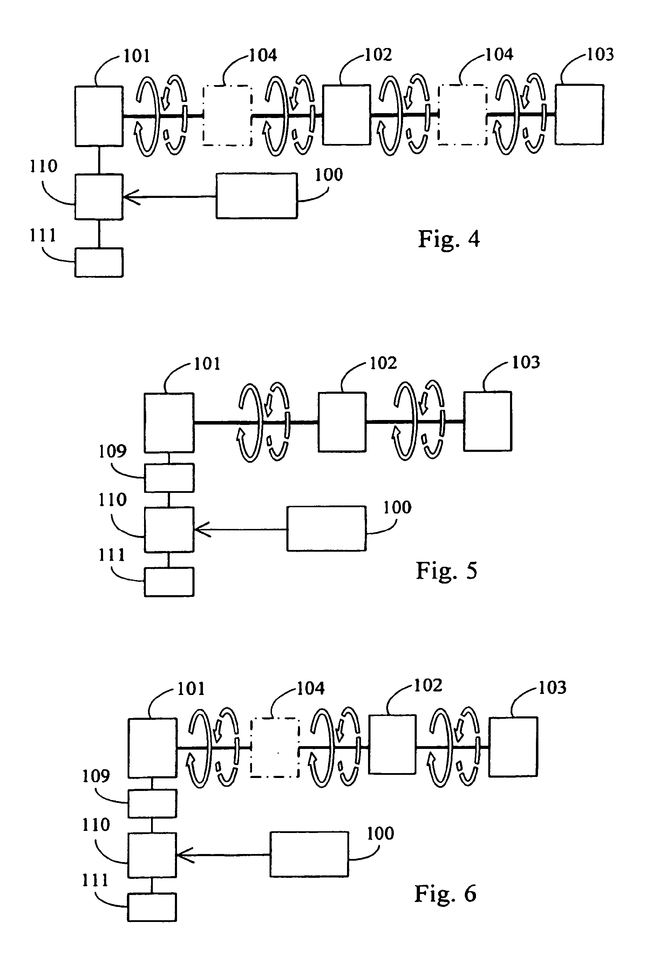

Fig. 4 is a block schematic view showing the driving system application example of Fig 1, wherein a transmission device(104) is respectively additionally installed between the bidirectional unequal speed electric motor(101) and the bidirectional same or different speed change ratio output transmission device(102) as well as between bidirectional same or different speed change ratio output transmission device(102) and the driven rotating load(103).

As shown in Figs 1, 2, 3 and 4, the bidirectional unequal speed electric motor driven bidirectional output system is through the operating signals or instructions sent by the input device(111) to allow the power of the power supply device(100) via the bidirectional unequal speed electric motor operative control device(110) to operate the bidirectional unequal speed electric motor(101) for the first driving rotating directional operation or the second different driving rotating directional operation, wherein the output rotating power from the output end of the bidirectional unequal speed electric motor(101) is transmitted to the input end of the bidirectional same or different speed change ratio output transmission device(102) directly or via the transmission device(104), thereby allowing the bidirectional same or different speed change ratio output transmission device having different speed change ratio to provide bidirectional different speed change ratio rotating output power while in different driving input direction for driving the rotating load(103) as shown in Figs 1~4, wherein:
- --- The bidirectional unequal speed electric motor(101) It is constituted by various AC or DC, brushed or brushless, synchronous or asynchronous electric driven bidirectional unequal speed electric motor for unequal positive or reverse rotations;
- --- The bidirectional unequal speed electric motor operative control device(110): It is constituted by electromechanical components or devices, or solid state electronic components or devices, or control circuits having microprocessor and relevant software for receiving the input from AC or DC power source of city power or generator, or the power of power supply device(100) such as fuel cells, primary batteries, or storage/discharge secondary batteries for turning on and off, and operating control the rotating direction, rotating speed and torque, as well as providing over-voltage, or over-current protection for the bidirectional unequal speed electric motor(101);
- --- The input device(111): It sends out signals or instructions to bidirectional unequal speed electric motor operative control device(110) for turning on and off, operative controlling or setting the rotating direction, rotating speed and toque of the bidirectional unequal speed electric motor(101);
- --- The input power of the first driving rotating direction and the second driving rotating direction of the bidirectional unequal speed electric motor(101) is used for driving the input end of the bidirectional same or different speed change ratio output transmission device(102)wherein the rotating speeds of the first rotating direction and the second rotating direction are different;
- --- The first driving rotating direction and second driving rotating direction are contrary to each other;
- --- The bidirectional same or different speed change ratio output transmission device(102): The bidirectional same or different speed change ratio output transmission device(102) is through receiving the rotating power of different rotating direction and different rotating speed from the bidirectional unequal speed electric motor(101) directly or via the transmission device(104) to output the bidirectional rotating directional power ; the internal transmission components of the bidirectional same or different speed change ratio output transmission device(102) are constituted by one or more than one transmission components of the following: 1) gear train; or 2) friction wheel train; or 3) chain and sprocket train; or 4) belt and pulley train; or 5) transmission crankshaft or wheel train; or 6)fluid transmission device; or 7) electromagnetic transmission device; wherein the speed ratio of input end to the bidirectional rotating output end of the bidirectional same or different speed change ratio output transmission device(102) while being driven for the different rotating direction, i.e. first driving rotating directional operation and second driving rotating directional operation, can be the same or different, or the variable speed change ratio;
- --- The rotating load(103): It is the bidirectional rotating load being driven by the output end of the bidirectional same or different speed change ratio output transmission device(102) directly or via the transmission device(104).
   The bidirectional unequal speed electric motor driven bidirectional output system is further installed with the transmission device(104) on at least one of the following locations thereof: 1) the transmission device(104) is additionally installed between the bidirectional same or different speed change ratio output transmission device(102) and rotating load(103), or 2) the transmission device(104) is additionally installed between the bidirectional unequal speed electric motor(101) and bidirectional same or different speed change ratio output transmission device(102), or 3) the transmission devices(104) are additionally installed between the bidirectional unequal speed electric motor(101) and the bidirectional same or different speed change ratio output transmission device(102), as well as between the bidirectional same or different speed change ratio output transmission device(102) and rotating load(103);
- --- The transmission device(104): The transmission device(104) is constituted by one or more than one transmission devices of the following: (1) various gear-type, belt-type, friction-type fixed speed ratio rotating type transmission functioning structure, or (2) the stepped or stepless variable speed device being operated manually, or by the mechanical force, or fluid force, or centrifugal force, or rotating torque or counter-rotating torque, or (3) the transmission device of operatively controllable the relative rotating directional relationships of switching between the input end and output end, or (4) the clutch device or the single way clutch being operated manually, or by the mechanical force, or electromagnetic force, or fluid force, or centrifugal force, or rotating torque, or counter-rotating torque for connecting transmission or interrupting transmission clutch functioning structure.

Fig. 2 is a block schematic view showing the driving system application example of Fig 1, wherein a transmission device(104) is additionally installed between the bidirectional unequal speed electric motor(101) and the bidirectional same or different speed change ratio output transmission device(102)

Fig. 3 is a block schematic view showing the driving system application example of Fig 1, wherein a transmission device(104) is additionally installed between the bidirectional same or different speed change ratio output transmission device(102) and the driven rotating load(103).

Fig. 4 is a block schematic view showing the driving system application example of Fig 1, wherein a transmission device(104) is respectively additionally installed between the bidirectional unequal speed electric motor(101) and the bidirectional same or different speed change ratio output transmission device(102) as well as between the bidirectional same or different speed change ratio output transmission device(102) and the driven rotating load(103).

Aforesaid bidirectional unequal speed electric motor driven bidirectional output system is manually operated by the input device(111) to operatively control the rotating direction of the bidirectional unequal speed electric motor(101) through the bidirectional unequal speed electric motor operative control device(110).

Besides, the bidirectional unequal speed electric motor driven bidirectional output system is further additionally installed with the bidirectional unequal speed electric motor load current detecting device(109) to automatically switch the output speed ratio according to loading current;

Fig. 5 is a block schematic view showing a driving system application example of Fig 1, wherein the bidirectional unequal speed electric motor driven bidirectional output system is installed with the bidirectional unequal speed electric motor loading current detecting device. Figure 5 does not fall within the scope of the claimed invention, but since the embodiments of Figures 6 to 8 do fall within the scope of the invention, and are based on the system of Figure 5, it is described in detail below.

Fig. 6 is a block schematic view showing the driving system application example of Fig 5, wherein a transmission device(104) is additionally installed between the bidirectional unequal speed electric motor(101) and the bidirectional same or different speed change ratio output transmission device(102).

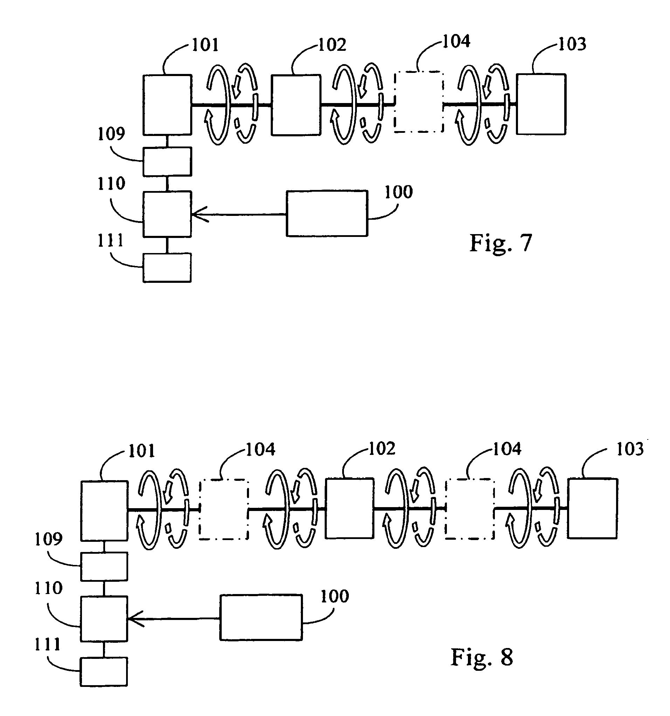

Fig. 7 is a block schematic view showing the driving system application example of Fig 5, wherein a transmission device(104) is additionally installed between the bidirectional same or different speed change ratio output transmission device(102) and the driven rotating load(103).

Fig. 8 is a block schematic view showing the driving system application example of Fig 5, wherein a transmission device(104) is respectively additionally installed between the bidirectional unequal speed electric motor(101) and the bidirectional same or different speed change ratio output transmission device(102) as well as between the bidirectional same or different speed change ratio output transmission device(102) and the driven rotating load(103).

As shown in aforesaid Figs 5~8, the bidirectional unequal speed electric motor driven bidirectional output system is further installed with the bidirectional unequal speed electric motor load current detecting device(109), wherein the bidirectional unequal speed electric motor load current detecting device(109) is constituted by the various reduced voltage type current detecting device, or electromagnetic inducting current detecting device, or magnetic detection type current detecting device, or heat accumulation type current detecting device to detect loading current of the bidirectional unequal speed electric motor(101) for feedback to the bidirectional unequal speed electric motor operative control device(110), when the state of the loading current of the bidirectional unequal speed electric motor(101) exceeding the predetermined value, and the state exceeding the predetermined time, the signal of the bidirectional unequal speed electric motor load current detecting device(109) is transmitted to the input device(111) or the bidirectional unequal speed electric motor operative control device(110) for changing the rotating direction of the bidirectional unequal speed electric motor(101) to further change the speed change ration of the bidirectional same or different speed change ratio output transmission device(102) thereby relatively increasing the speed reduction ratio so as to increase the output torque in the same rotating directional output to drive the load;

When the loading current of the bidirectional unequal speed electric motor(101) is returned to below the predetermined value, it can be operatively controlled to return to the original status by at least one of the two methods in the following:
1) The bidirectional unequal speed electric motor operative control device(110) is manually operatively controlled by the input device(111) to recover the bidirectional unequal speed electric motor(101) back to original rotating direction and drive the load at original speed ratio;
2) when the current detected by the bidirectional unequal speed electric motor load current detecting device(109) drops below the predetermined value, it is through the bidirectional unequal speed electric motor operative control device(110) to automatically select the load driving rotating speed at that time and relative to the speed ratio variation thereby to provide the load with the relative output power value of driving smoothly without disruption or sudden unexpected acceleration for driving the bidirectional unequal speed electric motor(101) smoothly back to the original rotating direction operation;

The bidirectional unequal speed electric motor driven bidirectional output system is further driven in different driving directions corresponding to different operating characteristic bidirectional outputs, wherein the rotating output direction switching is achieved by allowing one of the transmission devices(104) to be constituted by the transmission device having the output rotating direction and speed change ratio mechanical switching function.

For practical application of the bidirectional unequal speed electric motor driven bidirectional output system, each relevant device in aforesaid embodiments of the bidirectional unequal speed electric motor driven bidirectional output system is first individually independent and then transmissionly connected, or two or more than two of the relevant devices are integrally combined.

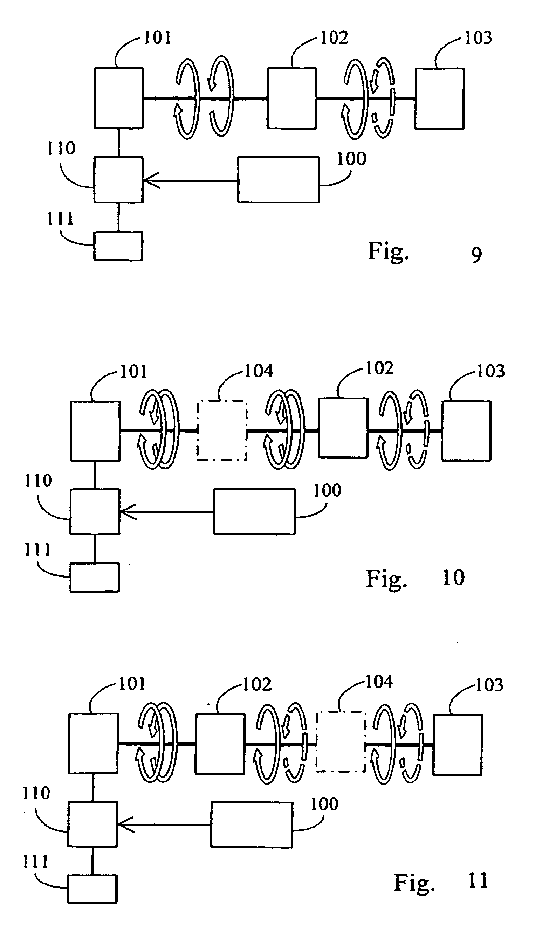

### DETAILED DESCRIPTION OFTHE EMBODIMENTS OF FIGURES 9 TO 16 DESCRIPTION OF MAIN COMPONENT SYMBOLS

100: Power supply device
101: Electric motor
102: Different rotating speed ratio and direction output transmission device
103: Rotating load
104: Transmission device
109: Electric motor loading current detecting device
110: Electric motor operative control device
111: Input device

The present invention is through the driving bidirectional positive or reverse rotation of the electric motor to drive the input end of the different rotating speed ratio and direction output transmission device and it is further through the output end of the different rotating speed ratio and direction output transmission device to operate the different rotating directional different speed change ratio output for driving the rotating load, wherein the present invention can be applied in electric motor driven carriers such as electric bicycles, electric motorcycles, or electric vehicles, or electric industrial machineries, tool machineries, or various electric tools or other electric motor driven loads.

Fig. 9 is a block schematic view of basic structure of a bidirectional different speed ratio electric motor driving device with bidirectional input. Figure 9 does not fall within the scope of the claimed invention, but since the embodiments of Figures 10 to 12 do fall within the scope of the invention, and are based on the system of Figure 9, it is described in detail below.

Fig. 10 is a block schematic view showing the driving system application example of Fig 9, wherein a transmission device(104) is additionally installed between the electric motor(101) and the different rotating speed ratio and direction output transmission device(102).

Fig. 11 is a block schematic view showing the driving system application example of Fig 9, wherein a transmission device(104) is additionally installed between the different rotating speed ratio and direction output transmission device(102) and the driven rotating load(103).

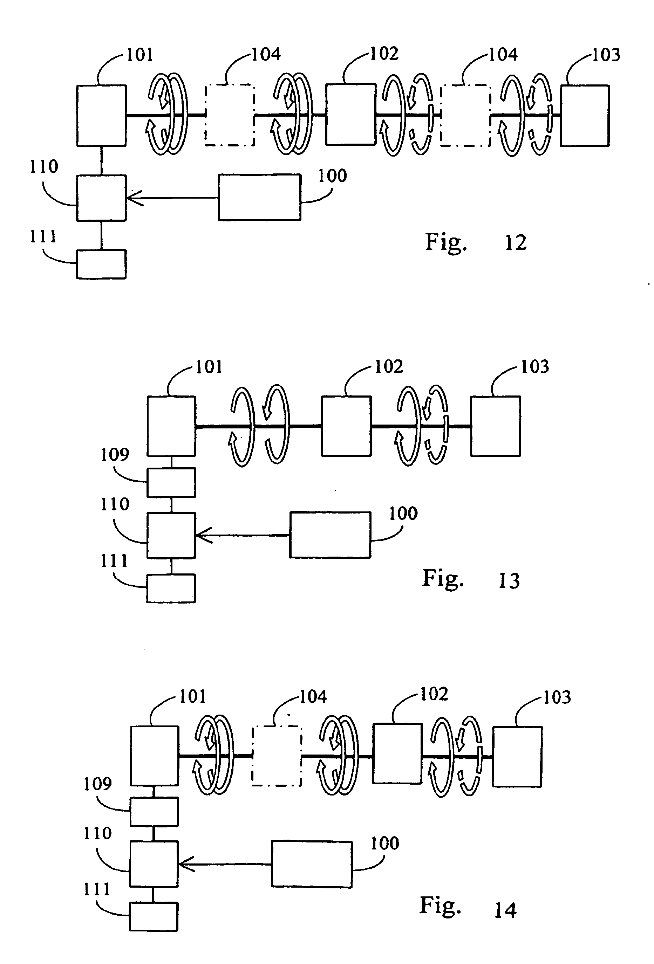

Fig. 12 is a block schematic view showing the driving system application example of Fig 9, wherein a transmission device(104) is respectively additionally installed between the electric motor(101) and the different rotating speed ratio and direction output transmission device(102) as well as between the different rotating speed ratio and direction output transmission device(102) and the driven rotating load(103).

As shown in Figs. 9, 10, 11 and 12, the bidirectional different speed ratio electric motor driving device with bidirectional input is through the operating signals or instructions sent by the input device(111) to allow the power of power supply device(100) via the electric motor operative control device(110) to operate the electric motor(101) for first driving rotating directional operation or the second different driving rotating directional operation, wherein the output rotating power from the output end of the electric motor(101)is transmitted to the input end of the different rotating speed ratio and direction output transmission device(102) directly or via the transmission device(104), thereby allowing the different rotating speed ratio and direction output transmission device having different speed change ratio to provide different rotating directional different speed change ratio output while in different driving input direction for driving the rotating load(103) as shown in Figs 9 ~ 12, wherein:
- --- The electric motor(101): It is constituted by various AC or DC, brushed or brushless, synchronous or asynchronous electric power driven electric motor for unequal speed positive or reverse rotations;
- --- The electric motor operative control device(110): It is constituted by electromechanical components or devices, or solid state electronic components or devices, or control circuits having a microprocessor and relevant software for receiving the input from an AC or DC power source of city power or a generator, or the power of power supply device(100) such as fuel cells, primary batteries, storage/discharge secondary batteries for turning on and off, and operating control the rotating direction, rotating speed and torque, as well as providing over-voltage and over-current protection for the electric motor(101);
- --- The input deviee(111): It sends out signals or instructions to the electric motor operative control device(110) for turning on and off, operative controlling or setting the rotating direction, rotating speed and toque of the electric motor(101)
- --- The input power of the first driving rotating direction and the second driving rotating direction of the electric motor(101) is used for driving the input end of the different rotating speed ratio and direction output transmission device(102) wherein the rotating speeds of the first rotating direction and the second rotating direction are different;
- --- The first driving rotating direction and second driving rotating direction are contrary to each other;
- --- The different rotating speed ratio and direction output transmission device(102): The different rotating speed ratio and direction output transmission device(102) is through receiving the different rotating direction power from the electric motor(101) directly or via the transmission device(104) to output the different rotating directional power; the internal transmission components of the different rotating speed ratio and direction output transmission device(102) are constituted by one or more than one transmission components of the following: 1) gear train; or 2) friction wheel train; or 3) chain and sprocket train; or 4) belt and pulley train; or 5) transmission crankshaft or wheel train; or 6)fluid transmission device; or 7) electromagnetic transmission device, wherein the speed ratio of input end to the different rotating directional output end of the different rotating speed ratio and direction output transmission device(102) while being driven for the different rotating direction, i.e. first driving rotating directional operation and second driving rotating directional operation, can be the same or different, or the variable speed change ratio;
- --- The rotating load(103): It is the constant unidirectional rotating load being driven by the output end of the different rotating speed ratio and direction output transmission device(102) directly or via the transmission device(104).
   The bidirectional different speed ratio electric motor driving device with bidirectional input is further installed with the transmission device(104) on at least one of the following locations thereof: 1) the transmission device(104) is additionally installed between the different rotating speed ratio and direction output transmission device(102) and the rotating load(103), or 2) the transmission device(104) is additionally installed between the electric motor(101) and the different rotating speed ratio and direction output transmission device(102), or 3) the transmission devices(104) are additionally installed between the electric motor(101) and the different rotating speed ratio and direction output transmission device(102), as well as between the different rotating speed ratio and direction output transmission device(102) and the rotating load(103);
- --- The transmission device(104): The transmission device(104) is constituted by one or more than one transmission devices of the following: 1) various gear-type, belt-type, friction-type fixed speed ratio rotating type transmission functioning structure, or 2) the stepped or stepless variable speed device being operated manually, or by the mechanical force, or fluid force, or centrifugal force, or rotating torque or counter-rotating torque, or 3) the transmission device of operatively controllable the relative rotating directional relationships of switching between the input end and the output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning structure.

Fig. 10 is a block schematic view showing the driving system application example of Fig 9, wherein a transmission device(104) is additionally installed between the electric motor(101) and the different rotating speed ratio and direction output transmission device(102).

Fig. 11 is a block schematic view showing the driving system application example of Fig 9, wherein a transmission device(104) is additionally installed between the different rotating speed ratio and direction output transmission device(102) and the driven rotating load(103).

Fig. 12 is a block schematic view showing the driving system application example of Fig 9, wherein a transmission device(104) is respectively additionally installed between the electric motor(101) and the different rotating speed ratio and direction output transmission device(102) as well as between the different rotating speed ratio and direction output transmission device(102) and the driven rotating load(103).

Aforesaid bidirectional different speed ratio electric motor driving device with bidirectional input is manually operated by the input device(111) to operatively control the rotating direction of electric motor(101) through the electric motor operative control device(110).

Besides, the bidirectional different speed ratio electric motor driving device with bidirectional input is further additionally installed with the electric motor loading current detecting device(109) to automatically switch the output speed ratio according to loading current;

Fig. 13 is a block schematic view of basic structure of the bidirectional different speed ratio electric motor driving device with bidirectional input installed with the electric motor loading current detecting device. Figure 13 does not fall within the scope of the claimed invention, but since the embodiments of Figures 14 to 16 do fall within the scope of the invention, and are based on the system of Figure 13, it is described in detail below.

Fig. 14 is a block schematic view showing the driving system application example of Fig 13, wherein a transmission device(104) is additionally installed between the electric motor(101) and the different rotating speed ratio and direction output transmission device(102).

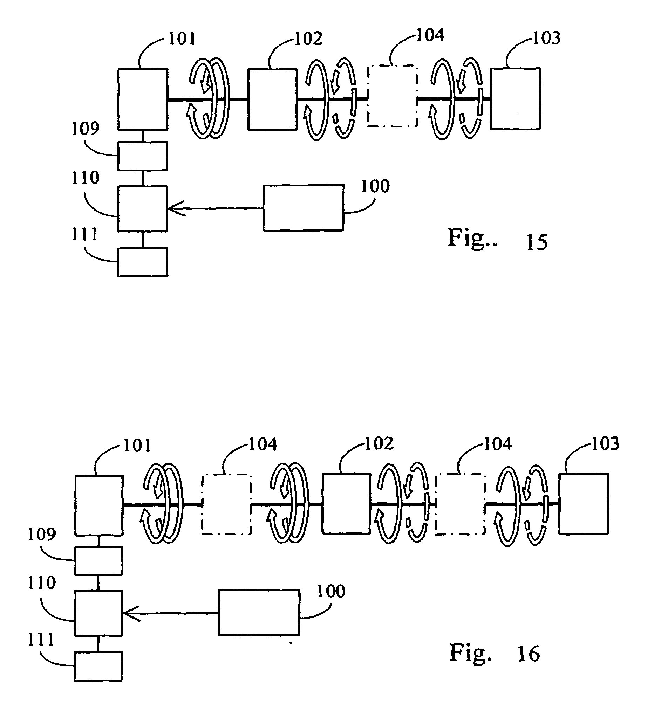

Fig. 15 is a block schematic view showing the driving system application example of Fig 13, wherein a transmission device(104) is additionally installed between the different rotating speed ratio and direction output transmission device(102) and the driven rotating load(103).

Fig. 16 is a block schematic view showing the driving system application example of Fig 13, wherein a transmission device(104) is respectively additionally installed between the electric motor(101) and the different rotating speed ratio and direction output transmission device(102) as well as between the different rotating speed ratio and direction output transmission device(102) and the driven rotating load(103).

As shown in aforesaid Figs 13~16, the bidirectional different speed ratio electric motor driving device with bidirectional input is further installed with the electric motor loading current detecting device(109), wherein the electric motor loading current detecting device(109) is constituted by the various reduced voltage type current detecting device, or electromagnetic inducting current detecting device, or magnetic detection type current detecting device, or heat accumulation type current detecting device to detect loading current of the electric motor(101) for feedback to the electric motor operative control device(110); when the state of the loading current of the electric motor exceeding the predetermined value, and the state exceeding the predetermined time, the signal of the electric motor loading current detecting device(109) is transmitted to the input device(111) or the electric motor operative control device(110) for changing the rotating direction of electric motor(101) to further change the speed change ratio of the different rotating speed ratio and direction output transmission device(102) thereby relatively increasing the speed reduction ratio so as to increase the output torque in the same rotating directional output to drive the load;

When the loading current of electric motor(101) is returned to drop below the predetermined value, it can be operatively controlled to return to its original status by at least one of the two methods in the following:
1) The electric motor operative control device(110) is manually operatively controlled by the input device(111) to recover the electric motor(101) back to original rotating direction and drive the load at original speed ratio;
2) When the current detected by the electric motor loading current detecting device(109) drops to the predetermined value, it is through the electric motor operative control device(110) to automatically select the load driving rotating speed at that time and relative to the speed ratio variation thereby allowing the electric motor(101) to provide the load with the relative output power value of driving smoothly without disruption or sudden unexpected acceleration for driving the electric motor(101) smoothly back to the original rotating direction operation;

The bidirectional different speed ratio electric motor driving device with bidirectional input is further driven in different driving directions, wherein the rotating output direction switching is achieved by allowing one of the transmission devices(104) to be constituted by the transmission device having the output rotating direction and speed change ratio mechanical switching function.

For practical application of the bidirectional different speed ratio electric motor driving device with bidirectional input, each relevant device in aforesaid embodiments of the bidirectional different speed ratio electric motor driving device with bidirectional input is first individually independent installed and then transmissionly connected, or two or more than two of the relevant devices are integrally combined.

A bidirectional different speed ratio electric motor driving device with bidirectional input of the present invention discloses that an output end of an electric motor is particularly used to provide different directional rotating input is transmitted to the input end of the different rotating speed ratio and direction output transmission device, and is through the output end of the different rotating speed ratio and direction output transmission device to further provide different directional rotating output for driving the rotating load, wherein the user is through operatively controlling the different rotating direction of the electric motor to change the driving input direction to provide different rotating directional variable speed ratio output while in different driving input direction.

The bidirectional different speed ratio electric motor driving device with bidirectional input may be through the operating signals or instructions sent by the input device (111) to allow the power of power supply device (100) via the electric motor operative control device (110) to operate the electric motor (101) for first driving rotating directional operation or the second different driving rotating directional operation, wherein the output rotating power from the output end of the electric motor (101) is transmitted to the input end of the different rotating speed ratio and direction output transmission device (102) directly or via the transmission device (104), thereby allowing the different rotating speed ratio and direction output transmission device having different speed change ratio to provide different rotating directional different speed change ratio output while in different driving input direction for driving the rotating load (103).

A bidirectional unequal speed electric motor driven bidirectional output system of the present invention discloses that an output end of an electric motor is particularly used to provide bidirectional rotating input is transmitted to the input end of the bidirectional same or different speed change ratio output transmission device, and is through the output end of the bidirectional same or different speed change ratio output transmission device to further provide bidirectional rotating output for driving the rotating load, wherein the user is through operatively controlling the rotating speed and operating direction of the bidirectional unequal speed electric motor to change the driving input direction thereby allowing the bidirectional same or different speed change ratio output transmission device having different speed change ratio to provide same or different speed change ratio bidirectional rotating output while in different driving input direction and different rotating speed.

The bidirectional unequal speed electric motor driven bidirectional output system may be through the operating signals or instructions sent by the input device (111) to allow the power of the power supply device (100) via the bidirectional unequal speed electric motor operative control device (110) to operate the bidirectional unequal speed electric motor (101) for the first driving rotating directional operation or the second different driving rotating directional operation, wherein the output rotating power from the output end of the bidirectional unequal speed electric motor (101) is transmitted to the input end of the bidirectional same or different speed change ratio output transmission device (102) directly or via the transmission device (104), thereby allowing the bidirectional same or different speed change ratio output transmission device having different speed change ratio to provide bidirectional different speed change ratio rotating output power while in different driving input direction for driving the rotating load (103).

The bidirectional unequal speed electric motor (101) may be constituted by various AC or DC, brushed or brushless, synchronous or asynchronous electric driven bidirectional unequal speed electric motor for unequal positive or reverse rotations.

The bidirectional unequal speed electric motor operative control device (110) may be constituted by electromechanical components or devices, or solid state electronic components or devices, or control circuits having microprocessor and relevant software for receiving the input from AC or DC power source of city power or generator, or the power of power supply device (100) such as fuel cells, primary batteries, or storage/discharge secondary batteries for turning on and off, and operating control the rotating direction, rotating speed and torque, as well as providing over-voltage, or over-current protection for the bidirectional unequal speed electric motor (101).

The input device (111) may send out signals or instructions to bidirectional unequal speed electric motor operative control device (110) for turning on and off, operative controlling or setting the rotating direction, rotating speed and torque of the bidirectional unequal speed electric motor (101).

The input power of the first driving rotating directional and the second driving rotating directional of the bidirectional unequal speed electric motor (101) may be used for driving the input end of the bidirectional same or different speed change ratio output transmission device (102), wherein the rotating speeds of the first rotating direction and the second rotating direction are different.

The first driving rotating direction and second driving rotating direction may be contrary to each other.

The bidirectional same or different speed change ratio output transmission device (102) may be through receiving the rotating power of different rotating direction and different rotating speed from the bidirectional unequal speed electric motor (101) directly or via the transmission device (104) to output the bidirectional rotating directional power; the internal transmission components of the bidirectional same or different speed change ratio output transmission device (102) are constituted by one or more than one transmission components of the following: 1) gear train; or 2) friction wheel train; or 3) chain and sprocket train; or 4) belt and pulley train; or 5) transmission crankshaft or wheel train; or 6) fluid transmission device; or 7) electromagnetic transmission device, wherein the speed ratio of input end to the bidirectional rotating output end of the bidirectional same or different speed change ratio output transmission device (102) while being driven for the different rotating direction, i.e. first driving rotating directional operation and second driving rotating directional operation, can be the same or different, or the variable speed change ratio.

The rotating load (103) may be the bidirectional rotating load being driven by the output end of the bidirectional same or different speed change ratio output transmission device (102) directly or via the transmission device (104).

## Claims

1. A bidirectional, electric motor drive system with a bidirectional input and a same or different directional output, the system comprising:
an electric motor (101), capable of bi-directional, variable-speed rotation, in a forwards direction or in a reverse direction;
a control device (110) for controlling the rotational direction and the rotational speed of the electric motor;
a variable-speed and variable-directional output transmission device (102) in drivable engagement with the output of the electric motor;
a load (103) in drivable engagement with the output end of the variable-speed and variable-directional output transmission device; and
a transmission device (104) disposed between the variable-speed and variable-directional output transmission device (102) and the load (103), or between the electric motor (101) and the variable-speed and variable-directional output transmission device (102), or between the electric motor (101) and the variable-speed and variable-directional output transmission device (102) as well as between the variable-speed and variable-directional output transmission device (102) and the load (103)
wherein the variable-speed and variable-directional output transmission device (102) is such as to accept the variable rotational speed and different rotational direction output from the electric motor (101) and provide a variable-directional rotational output at a variable or constant speed ratio; and
wherein the rotational direction and rotational speed of the output from the variable-spced and variable-directional output transmission device (102) are capable of being same or different to the rotational direction and the rotational speed of the input from the electric motor (101).

2. A system as claimed in claim 1, further comprising an input device (111) for issuing control signals to the control device (110) for operatively controlling or setting the on/off, the rotational direction, the rotational speed, and/or the torque to the electric motor (101).

3. A system as claimed in claim 1 or claim 2, further comprising a power supply device (100) for supplying power to the electric motor (101) via the control device (110).

4. A system as claimed in any one of the preceding claims, wherein the transmission device (104) is constituted by one or more than one transmission devices of the following: 1) a gear-type, a belt-type, a friction-type fixed speed ratio rotating type transmission functioning structure, or 2) a stepped or stepless variable speed device operated manually, or by a mechanical force, a fluid force or a centrifugal force, or by a rotating torque or a counter-rotating torque, or 3) the transmission device has the capability for operatively controlling the switching relationship of the relative rotating directions at the input end and output end, or 4) a clutch device or a single way clutch operated manually, or by a mechanical force, an electromagnetic force, a fluid force, a centrifugal force, a rotating torque, or a counter-rotating torque for connecting transmission or interrupting transmission clutch functioning structure.

5. A system as claimed in any one of claims 1 to 4, further comprising an electric motor load current detection device (109), which can be a buck/step-down type current detection device, a reduced voltage type current detecting device, an electromagnetic effect induction type current detection device, a magnetic detecting type current detection device, or a heat accumulated type current detection device for detecting load current of the electric motor (101), thereby to provide feedback to the control device (110); wherein, when the load current of the electric motor exceeds a predetermined value and the status exceeds a preset time, the signals from the electric motor load current detection device (109) are transmitted to the input device (111) or to the control device (110) so as to change the rotational direction of the electric motor (101), and further to change the speed ratio of the variable-speed and variable-directional output transmission device (102) to a relatively larger ratio to increase the output in the same rotational direction of the output rotational torque further to drive the load.

6. A system as claimed in claim 5, wherein, when the load current of the electric motor (101) returns and drops below the predetermined value, by manual control of the input device (111), the control device (110) can be operatively controlled to enable the electric motor (101) to return to the original rotational direction, thereby driving the load at the original speed ratio.

7. A system as claimed in claim 5, wherein, when the load current of the electric motor (101) returns and drops below the predetermined value, by means of the electric motor operative control device (110), the electric motor load current detection device (109) detects current dropping to the predetermined value thereby automatically selecting the rotational speed which is not only capable of driving the load at that time, but also capable of outputting corresponding power according to the variation of the speed ratio so as to drive the load fluently without pauses or unexpected accelerations, thereby to drive the electric motor (101) fluently in the original rotational direction.

8. A system as claimed in any one of the preceding claims, wherein the electric motor is capable of being driven in different driving directions, wherein switching of the rotational output direction is achieved by allowing one of the transmission devices (104) to be constituted by a transmission device having an output rotational direction and speed change ratio mechanical switching function.

9. A system as claimed in any one of claims 1 to 8, wherein the control device (110) is constituted by dynamo-electric components or devices, or by solid state electronic components or devices, or by control circuits having a microprocessor and associate operative software for inputting AC or DC power from a utility power source or a generator, or by inputting electric power from a power supply device (100) such as a fuel battery, a primary battery, or a charge/discharge secondary battery, thereby operatively to control the on/off, the rotational direction, the rotational speed, or the torque to the electric motor (101), or to provide over-voltage or over-current protection to the electric motor (101).

10. A system as claimed in any one of claims 1 to 9, wherein each device hereinbefore described is individually transmissionally connected in the system, or two or more of the devices are integrally combined.

11. A system as claimed in any one of claims 1 to 10. wherein, when it is further required to perform constant directional output in different driving directions, this can be achieved by means of the control device (110) operatively controlling the initial driving direction of the electric motor (101).

12. A system as claimed in any one of claims 1 to 11, wherein, when it is further required to perform constant directional output in different driving directions, this can be achieved by additionally installing a motor direction switch for manually switching the initial rotational direction of the motor.

13. A system as claimed in any one of claims 1 to 12, wherein, when it is further required to perform constant directional output in different driving directions, this can be achieved by the transmission device (104) being constituted by a transmission device having functions of mechanically switching the rotational direction of the output, and of changing the speed ratio for switching the rotational direction of output.

14. A system as claimed in any one of claims 1 to 13, wherein the load (103) is a wheel train type load directly driven by the variable-speed and variable-directional output transmission device (102) or driven in a single constant directional rotation via the transmission device (104).

## Patentansprüche

1. Bidirektionale elektromotorische Antriebsanordnung mit einem bidirektionalen Eingang und einem gleich- oder anders gerichteten Ausgang mit:
einem Elektromotor (101), der bidirektional mit variabler Drehzahl vor- oder rückwärts drehen kann;
einer Steuereinrichtung (110), mit der die Drehrichtung und -zahl des Elektromotors steuerbar ist;
einer Übertragungseinrichtung (102) mit Ausgang variabler Drehzahl und variabler Drehrichtung in antrieblicher Kopplung mit dem Abtrieb des Elektromotors;
einer Last (103) in antrieblicher Kopplung mit dem Ausgang der einen Ausgang variabler Drehzahl und variabler Drehrichtung aufweisenden Übertragungseinrichtung; und
einer Übertragungseinrichtung (104), die zwischen die Übertragungseinrichtung (102) mit Ausgang variabler Drehzahl und variabler Drehrichtung und der Last (103) oder zwischen dem Elektromotor (101) und der Übertragungseinrichtung (102) mit Ausgang variabler Drehzahl und variabler Drehrichtung oder zwischen dem Elektromotor (101) und der Übertragungseinrichtung (102) sowie zwischen der Übertragungseinrichtung (102) mit Ausgang variabler Drehzahl und variabler Drehrichtung und der Last (103) angeordnet ist;
wobei die Übertragungseinrichtung (102) mit Ausgang variabler Drehzahl und variabler Drehrichtung den Abtrieb variabler Drehzahl und anderer Drehrichtung des Elektromotors (101) übernimmt und einen Drehausgang variabler Richtung bei variablem oder konstantem Drehzahlverhältnis liefert; und
wobei die Drehrichtung und Drehzahl des Abtriebs der Übertragungseinrichtung (102) mit Ausgang variabler Drehzahl und variabler Drehrichtung gleich der oder anders sein können als die Drehrichtung und die Drehzahl des Antriebs aus dem Elektromotor (101).

2. System nach Anspruch 1, weiterhin mit einer Eingabeeinrichtung (111) zur Abgabe von Steuersignalen an die Steuereinrichtung (110) zur betrieblichen Steuerung oder zum Setzen des Ein-/Aus-Zustands, der Drehrichtung, der Drehzahl und/ oder des Drehmoments für den Elektromotor (101).

3. System nach Anspruch 1 oder 2, weiterhin mit einer Stromversorgung (100) zum Speisen des Elektromotors (101) über die Steuereinrichtung (110).

4. System nach einem beliebigen der voranstehenden Ansprüche, bei dem die Übertragungseinrichtung (104) aus einer oder mehr der folgenden Übertragungseinrichtungen besteht: 1) einer mit festem Übertragungsverhältnis umlaufenden Struktur mit Übertragungsfunktion des Zahnrad-, Riemen- oder Friktionstyps; oder 2) einer gestuft oder stufenlos arbeitenden Einrichtung variabler Drehzahl, die durch manuell, mechanisch, fluidisch oder zentrifugal aufgebrachte Kraft oder durch ein Dreh- oder Gegendrehmoment betätigt wird; oder 3) eine Übertragungseinrichtung, die die Umschaltbeziehung der Drehrichtungen relativ zueinander am Ein- und Ausgang steuern kann; oder 4) eine Kupplungseinrichtung oder Einwegkupplung, die mit manuell, mechanisch, fluidisch oder zentrifugal aufgebrachte Kraft oder durch ein Dreh- oder Gegendrehmoment betätigt wird, um die Struktur mit Kupplungsfunktion durchzuschalten oder zu trennen.

5. System nach einem beliebigen der Ansprüche 1 bis 4, weiterhin mit einer den Laststrom des Elektromotors erfassenden Einrichtung (109), bei der es sich um einen Absetz-/Abwärts-Stromdetektor, einen Abspann-Stromdetektor, einen Induktions-Stromdetektor, einen Magnetfeld-Stromdetektor oder einen Wärmesammel-Stromdetektor zum Ermitteln des Laststroms des Elektromotors (101) handeln kann, um so eine Rückmeldung an die Steuereinrichtung (110) zu liefern, wobei, wenn der Laststrom des Elektromotors einen vorbestimmten Wert und der Zustand eine voreingestellte Dauer übersteigen, die Ausganssignale der den Laststrom des Elektromotors ermittelnden Einrichtung (109) an die Eingabe- oder die Steuereinrichung (111 bzw. 110) übertragen werden, um die Drehrichtung des Elektromotors (101) und weiterhin das Übertragungsverhältnis der Übertragungseinrichtung mit Ausgang variabler Drehzahl und variable Drehrichtung auf ein höheres Überrtragungsverhältnis hin zu ändern, um den Abtrieb gleicher Drehrichtung des Ausgangsdrehmoments zu erhöhen und so die Last weiter anzutreiben.

6. System nach Anspruch 5, bei dem, wenn in Folge einer Handsteuerung der Eingabeeinrichtung (111) der Laststrom des Elektromotors (101) zurückkehrt und unter den vorbestimmten Wert abfällt, die Steuereinrichtung (110) betrieblich so steuerbar ist, dass der Elektromotor (101) in die ursprüngliche Drehrichtung zurückkehrt und so die Last mit dem ursprünglichen Drehzahlverhältnis angetrieben wird.

7. System nach Anspruch 5,. bei dem, wenn infolge der Ansteuerung der Steuereinrichtung (110) durch den Elektromotor der Laststrom des Elektromotors (101) zurückkehrt und unter den vorbestimmten Wert sinkt, die den Laststrom des Elektromotors ermittelnde Einrichtung (109) das Absinken des Stroms auf den vorbestimmten Wert erfasst und dadurch die Drehzahl selbsttätig ausgewählt wird, bei der nicht nur an diesem Zeitpunkt die Last angetrieben, sondern auch die Leistung entsprechend der Variation des Drehzahlverhältnisses abgegeben werden kann, um die Last stoßfrei ohne Unterbrechung oder unerwartete Beschleunigungen und so den Elektromotor (101) in der ursprünglichen Drehrichtung stoßfrei anzutreiben.

8. System nach einem beliebigen der vorgehenden Ansprüche, bei dem der Elektromotor in verschiedenen Richtungen ansteuerbar ist, wobei das Umschalten der Richtung des Drehausgangs erfolgt, indem eine der Übertragungseinrichtungen (104) eine Übertragungseinrichtung ist, bei der das Umschalten der Drehrichtung und des Übertragungsverhältnisses durch mechanisches Umschalten erfolgen.

9. System nach einem beliebigen der Ansprüche 1 bis 8, bei dem die Steuereinrichtung (110) aus dynamoelektrischen Komponenten bzw. Einrichtungen oder elektronischen Festkörperkomponenten bzw. -einrichtungen oder aus Steuerschaltungen mit einem Mikroprozessor und zugehöriger Betriebs-Software besteht, um Gleich- oder Wechselstrom aus einem Versorgungsanschluss oder einem Generator oder oder elektrischen Strom aus einer Versorgungseinrichtung (100) wie bspw. einer Brennstoffzelle, einer Primärbatterie oder einer lad-/entladbaren Sekundärbatterie einzuspeisen und so den Ein-/Aus-Zustand, die Drehrichtung, die Drehzahl oder das Drehmoment des Elektromotors (101) zu steuern oder einen Überspannungs- oder Überstromschutz für diesen bereit zu stellen.

10. System nach einem beliebigen der Ansprüche 1 bis 9, bei dem jede der oben beschriebenen Einrichtungen in das System übertragungsmäßig einzeln oder zu mehreren kombiniert eingefügt ist.

11. System nach einem beliebigen der Ansprüche 1 bis 10, bei dem, wenn weiterhin ein konstanter Richtungsabtrieb in verschiedenen Richtungen gefordert ist, dies sich erreichen lässt, indem man die Steuereinrichtung (110) betrieblich die ursprüngliche Antriebsrichtung des Elektromotors (101) steuern lässt.

12. System nach einem beliebigen der Ansprüche 1 bis 11, bei dem, wenn weiterhin einen konstanter Richtungsabtrieb in unterschiedlichen Abtriebsrichtungen gefordert ist, dies erreichbar ist, indem man zusätzlich einen Motorrichtungsumschalter zum manuellen Umschalten der ursprüngliche Motordrehrichtung installiert.

13. System nach einem beliebigen der Ansprüche 1 bis 12, bei dem, wenn weiterhin einen konstanter Richtungsabtrieb in unterschiedlichen Abtriebsrichtungen gefordert ist, dies erreichbar ist, indem die Übertragungseinrichtung (104) eine solche mit mechanischer Umschaltung der Ausgangs-Drehrichtung und Änderung des Drehzahlverhältnisses zum Umschalten der Drehrichtung des Abtriebs ist.

14. System nach einem beliebigen der Ansprüche 1 bis 13, bei dem die Last (103) ein Antriebsradstrang ist, den die Übertragungseinrichtung (102) mit Ausgang variabler Drehzahl und variabler Drehrichtung antreibt oder der über die Übertragungseinrichtung (104) mit einer einzigen konstanten Drehrichtung angetrieben wird.

## Revendications

1. Système de commande de moteur électrique bidirectionnel comprenant une entrée bidirectionnelle et une sortie directionnelle identique ou différente, le système comprenant:
. un moteur électrique (101) capable d'une rotation à vitesse variable bidirectionnelle, dans une direction vers l'avant ou dans une direction inverse;
. un dispositif de commande (110) pour commander la direction de rotation et la vitesse de rotation du moteur électrique;
. un dispositif de transmission de sortie à direction variable et à vitesse variable (102) en engagement d'entraînement avec la sortie du moteur électrique;
. une charge (103) en engagement d'entraînement avec l'extrémité de sortie du dispositif de transmission de sortie à direction variable et à vitesse variable; et
. un dispositif de transmission (104) qui est disposé entre le dispositif de transmission de sortie à direction variable et à vitesse variable (102) et la charge (103), ou entre le moteur électrique (101) et le dispositif de transmission de sortie à direction variable et à vitesse variable (102), ou entre le moteur électrique (101) et le dispositif de transmission de sortie à direction variable et à vitesse variable (102) ainsi qu'entre le dispositif de transmission de sortie à direction variable et à vitesse variable (102) et la charge (103);
. dans lequel le dispositif de transmission de sortie à direction variable et à vitesse variable (102) est conçu de manière à accepter la sortie à direction de rotation différente et à vitesse de rotation variable en provenance du moteur électrique (101), et à générer une sortie rotative à direction variable à un rapport de vitesse variable ou constant; et
dans lequel la direction de rotation et la vitesse de rotation de la sortie en provenance du dispositif de transmission de sortie à direction variable et à vitesse variable (102) peuvent être identiques ou différentes de la direction de rotation et de la vitesse de rotation de l'entrée en provenance du moteur électrique (101).

2. Système selon la revendication 1, comprenant en outre un dispositif d'entrée (111) pour délivrer des signaux de commande au dispositif de commande (110) afin de commander ou de régler de façon opérationnelle la marche/arrêt, la direction de rotation, la vitesse de rotation, et/ou le couple au moteur électrique (101).

3. Système selon la revendication 1 ou la revendication 2, comprenant en outre un dispositif d'alimentation électrique (100) pour fournir du courant au moteur électrique (101) par l'intermédiaire du dispositif de commande (110).

4. Système selon l'une quelconque des revendications précédentes, dans lequel le dispositif de transmission (104) est constitué d'un ou de plusieurs dispositif(s) de transmission du type suivant: 1) une structure de fonctionnement de transmission du type rotatif à rapport de vitesse fixe du type à frottement, à engrenage et à courroie; ou 2) un dispositif à vitesse variable en continu ou par degrés actionné manuellement, ou par une force mécanique, une force hydraulique ou une force centrifuge, ou par un couple de rotation ou un couple contrarotatif, ou 3) le dispositif de transmission possède la capacité de commander de façon opérationnelle la relation de commutation des directions de rotation relatives à l'extrémité d'entrée et à l'extrémité de sortie, ou 4) un dispositif d'embrayage ou un embrayage à voie unique actionné manuellement, ou par une force mécanique, une force électromagnétique, une force hydraulique, une force centrifuge, un couple de rotation ou un couple contrarotatif pour connecter la transmission ou interrompre la structure de fonctionnement d'embrayage de transmission.

5. Système selon l'une quelconque des revendications 1 à 4, comprenant en outre un dispositif de détection de courant de charge de moteur électrique (109), qui peut être un dispositif de détection de courant du type réducteur/abaisseur, un dispositif de détection de courant du type à tension réduite, un dispositif de détection de courant du type à induction d'effet électromagnétique, un dispositif de détection de courant du type à détection magnétique, ou un dispositif de détection de courant du type à accumulation de chaleur, afin de détecter le courant de charge du moteur électrique (101), fournissant de ce fait une réponse au dispositif de commande (110); dans lequel, lorsque le courant de charge du moteur électrique dépasse une valeur prédéterminée et que le statut dépasse un temps prédéfini, les signaux en provenance du dispositif de détection de courant de charge de moteur électrique (109) sont transmis au dispositif d'entrée (111) ou au dispositif de commande (110) de manière à changer la direction de rotation du moteur électrique (101), et à changer en outre le rapport de vitesse du dispositif de transmission de sortie à direction variable et à vitesse variable (102) pour un rapport de vitesse relativement plus élevé afin d'augmenter la sortie dans la même direction de rotation du couple de rotation de sortie pour entraîner en outre la charge.

6. Système selon la revendication 5, dans lequel, lorsque le courant de charge du moteur électrique (101) retourne à et chute en dessous de la valeur prédéterminée, par une commande manuelle du dispositif d'entrée (111), le dispositif de commande (110) peut être commandé de façon opérationnelle pour permettre au moteur électrique (101) de retourner vers la direction de rotation originale, entraînant de ce fait la charge au rapport de vitesse original.

7. Système selon la revendication 5, dans lequel, lorsque le courant de charge du moteur électrique (101) retourne à et chute en dessous de la valeur prédéterminée, au moyen du dispositif de commande opérationnel de moteur électrique (110), le dispositif de détection de courant de charge de moteur électrique (109) détecte la chute du courant à la valeur prédéterminée, sélectionnant de ce fait automatiquement la vitesse de rotation qui n'est pas seulement capable d'entraîner la charge à cet instant, mais qui est également capable de produire une puissance correspondante selon la variation du rapport de vitesse, de manière à entraîner la charge uniformément sans pauses ni accélérations inattendues, entraînant de ce fait le moteur électrique (110) uniformément dans la direction de rotation originale.

8. Système selon l'une quelconque des revendications précédentes, dans lequel le moteur électrique peut être entraîné dans des directions d'entraînement différentes, dans lequel la commutation de la direction de sortie de rotation est obtenue en permettant à l'un des dispositifs de transmission (104) d'être constitué par un dispositif de transmission qui présente une fonction de commutation mécanique de rapport de changement de vitesse et de direction de rotation de sortie.

9. Système selon l'une quelconque des revendications 1 à 8, dans lequel le dispositif de commande (110) est constitué par des composants ou des dispositifs dynamo-électriques, ou par des composants ou des dispositifs électroniques à l'état solide, ou par des circuits de commande comprenant un microprocesseur et un logiciel d'exploitation associé pour entrer du courant alternatif ou du courant continu à partir d'une source de puissance publique ou d'un générateur, ou en entrant du courant électrique à partir d'un dispositif d'alimentation électrique (100) tel qu'une pile à combustible, une batterie primaire ou une batterie secondaire de chargement/déchargement, afin de commander de ce fait de façon opérationnelle la marche/arrêt, la direction de rotation, la vitesse de rotation ou le couple au moteur électrique (101), ou pour fournir une protection contre la surtension ou la sur-intensité au moteur électrique (101).

10. Système selon l'une quelconque des revendications 1 à 9, dans lequel chaque dispositif décrit ci-dessus est individuellement connecté de façon transmissive dans le système, ou deux ou plus de deux des dispositifs sont intégralement combinés.

11. Système selon l'une quelconque des revendications 1 à 10, dans lequel, lorsqu'il est en outre requis d'exécuter une sortie directionnelle constante dans différentes directions d'entraînement, ceci peut être effectué au moyen du dispositif de commande (110) qui commande de façon opérationnelle la direction d'entraînement initiale du moteur électrique (101).

12. Système selon l'une quelconque des revendications 1 à 11, dans lequel, lorsqu'il est en outre requis d'exécuter une sortie directionnelle constante dans différentes directions d'entraînement, ceci peut être effectué en installant en plus un commutateur de direction de moteur afin de commuter manuellement la direction de rotation initiale du moteur.

13. Système selon l'une quelconque des revendications 1 à 12, dans lequel, lorsqu'il est en outre requis d'exécuter une sortie directionnelle constante dans différentes directions d'entraînement, ceci peut être effectué par le dispositif de transmission (104) qui est constitué par un dispositif de transmission qui présente des fonctions de commutation mécanique de la direction de rotation de la sortie, et de changement du rapport de vitesse pour commuter la direction de rotation de la sortie.

14. Système selon l'une quelconque des revendications 1 à 13, dans lequel la charge (103) est une charge du type train de roues qui est directement entraînée par le dispositif de transmission de sortie à direction variable et à vitesse variable (102) ou qui est entraînée dans une seule rotation directionnelle constante par l'intermédiaire du dispositif de transmission (104).
